# EUROPEAN PATENT APPLICATION

(11) **EP 0 552 000 A1**
(43) Date of publication of application: **21.07.1993**
(21) Application number: 93300134.9
(22) Date of filing: 08.01.1993
(51) Int. Cl.: A01D 34/68

(54) **Rotary type mowing apparatus**

(30) Priority: 08.01.1992 GB 9200271
(71) Applicant: FLYMO LIMITED, Newton Aycliffe, Co. Durham DL5 6UP (GB)
(72) Inventor: Howells, Paul Edward, Darlington, Co. Durham DL3 8PQ (GB)
(74) Representative: Harrison, Ivor Stanley

(57) **Abstract**

Rotary type mowing apparatus, which in use is supported above the ground or other reaction surface by means of a cushion of air generated by a rotary impeller, includes wheels (17,18) and/or rollers (28) mounted on axles which are displaceable between a lowered ground-engaging position and a retracted position, whereby the user can choose between use of the apparatus with the wheels (17,18) or rollers (28) in contact with the ground or, alternatively, in the hover mode.

## Description

This invention relates to rotary apparatus, especially to rotary mowers, which in use are supported above the ground or other reaction surface by means of a cushion of air generated by a rotary impeller.

One form of rotary apparatus is a rotary mower, which is a grass-cutting machine in which the cutter comprises a generally flat blade mounted for rotation in a substantially horizontal plane. Such mowers are powered either by an electric motor or by an internal combustion engine and may be supported either in traditional fashion by wheels and/or rollers or more recently, in a so-called "hover mower", by a cushion of air generated by an impeller attached, directly or indirectly, to the drive shaft from the power source. A mower which includes wheels or rollers is in general regarded as being more convenient for transportation purposes, particularly when not under power, and additionally, if a roller is included which extends substantially across the width of the mower, will provide a striped effect in the mowed lawn, whereas a hover mower is more convenient for use in confined areas, for example around shrubs or fruit trees, and on steep slopes and banks. The reason why a hover mower is more convenient in these situations is that it can be moved from side to side, or in an arc, or backwards, with equivalent grass-cutting efficiency and with as much ease as it can be moved forwards. Additionally, for use on a slope, a hover mower can be attached to a rope and controlled remotely from the top of the slope.

It is an object of the present invention to provide rotary apparatus such as a rotary lawn mower which combines the advantages of wheel- or roller-equipped mowers and hover mowers.

According to the invention, rotary apparatus (as hereinbefore defined) which includes an impeller for generating a cushion of air to maintain the apparatus above and spaced from a reaction surface in use comprises at least one transversely-disposed axle having wheel means mounted thereon for rotation, the axle being displaceable between a lowered position in which the wheel means are ground-engageable and a retracted position in which the wheel means are spaced from the reaction surface in use.

The apparatus may be a rotary mower, in which the wheel means when in the retracted position is preferably substantially above the plane in which the cutter blade rotates.

Preferably, apparatus according to the invention includes at least two transversely-disposed axles each including wheel means, each axle being displaceable as defined. Conveniently, the axles are linked whereby displacement of one axle automatically causes simultaneous displacement of the other axle.

The remainder of this specification will refer to rotary mowers, it being understood that other forms of rotary apparatus are included with suitable adaptation of parts which are specific to mowers.

Rotary mowers generally include a housing which defines a cutting chamber, the housing including a depending lip or skirt which substantially surrounds the locus of the tips of the cutter blade. By "ground-engageable" is meant that the axle in the lowered position causes the wheel means to be diposed beneath the housing such that, with the machine in its normal position of use and standing on the ground, the weight of the machine is borne by the wheel means, which may comprise wheel or roller elements, and the cutter blade is supported a predetermined distance above the ground surface, for traditional mowing. In the raised axle position, on the other hand, the wheel means are disposed such that, with the motor running, the weight of the machine is supported by the resulting cushion of air generated by the impeller and the machine can be used in the "hover" mode. Even in the raised position, however, the wheel means may extend partially below the housing, in order to protect the lower edge thereof from contact with the ground or floor, for example of a garage, when the motor is not running, but still high enough to be sufficiently clear of the ground, when the motor is running, not to interfere with use of the machine in the hover mode.

Preferably, in the lowered axle position, the predetermined distance by which the cutter blade is supported above the ground is selectively adjustable, to vary the effective cutting height.

For use in traditional mowing, where it is required for maximum weight to be transmitted to the ground via the wheel or roller elements, the mower may include means to isolate or disconnect the impeller from the motor, or to reduce the effect thereof, for example by diverting or deflecting the current of air to reduce or nullify the hover effect. This is particularly important where a roller is present, for attaining stripes in the mown lawn with optimum effect.

According to one embodiment of the invention, each axle may be cranked whereby a first part is pivotably mounted to the mower about a first transverse horizontal axis, wheels or rollers being rotatably mounted on a second part or parts about a second transverse horizontal axis spaced from the first, wherein pivoting movement of the first part of the axle moves the second part or parts in an arc from a position in which the wheels or rollers are raised to a position in which they are lowered, and vice versa. For example, the first part of one axle may comprise a central portion pivotably attached to the mower, the axle having second parts comprising cranked outer end portions on which wheels are mounted. Another axle may be generally similar but have a roller mounted for rotation on the central portion, the axle being pivotably attached to the mower about its cranked end portions. Alternatively, the wheels or roller may be rotatably attached to the distal ends of arms the proximal ends of which are pivotably attached to the mower. Means for linking the axles together for displacement purposes may include a mechanical connection such as a rod member pivotably joined at each end to a lever attached radially to the part of the respective axle attached to the mower, whereby pivotal movement of one axle causes its associated lever to transmit a similar pivotal movement to the other axle. Coveniently, the respective spaced-apart axes and the lever function for operating the displacement thereof may be provided by means of a bell-crank, respective arms of which are pivotably attached to the rod member and to the wheel or roller axle and the angle of which is pivotably attached to the mower body.

Displacement of the axles may be actuated by the user by a means of a suitable shift member.

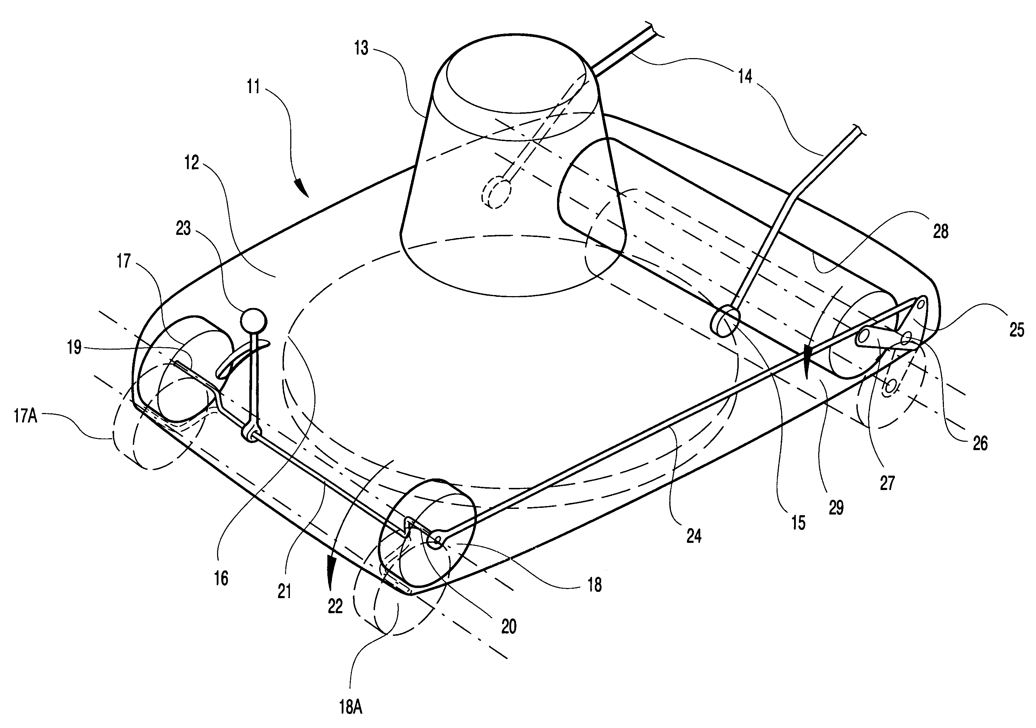

Embodiments of the invention will now be described by way of example with reference to the accompanying drawing, which is a diagrammatic representation of a rotary mower having a retractable roller at the front and retractable wheels at the rear.

As illustrated, the mower includes a housing 11 defining a cutting chamber 12 and a motor housing 13. Handles 14 are pivotably attached to the housing 15. The locus of the rotary cutting blade is indicated at 16.

A pair of wheels 17,18 are rotatably attached to the cranked ends 19, 20 of a front axle having a central part 21. The central part is attached to the underside of the housing for pivoting movement between a first position in which the wheels 17, 18 are retracted, as shown, and a position in which the cranked ends 19, 20 extend forwardly and the wheels are lowered with respect to the housing. The forwards pivoting movement of the axle is indicated by the arrow 22, the lowered position of the wheels being indicated 17A, 18A. The pivoting movement is controlled by a handle 23 which extends upwardly through a slot in the housing.

A link rod 24 is pivotally attached to the distal end of the cranked end 20 of the front axle. The rear end of the rod 24 is attached to one arm 25 of a bell-crank which is pivotably mounted at 26 to the rear lower part of the housing. The other arm 27 of the bell-crank carries one end of an axle for a roller 28; the other end of the axle is journalled in one end of an arm (not shown) which corresponds with the arm 28 of the bell-crank and is pivoted to the rear lower part of the housing for movement about a pivot axis which is in alignment with the axis of mounting 26.

In use, movement of the front axle in the direction shown by arrow 22 causes the cranked ends 19, 20 to pivot forwardly in an arc; the rod 24 thereby moves forwardly and exerts a turning force on the bell-crank about the transverse axis at 26, whereby the roller 28 is moved downwardly as shown by arrow 29. Movement of the handle 23 to retract the front wheels will cause a rearwards movement to rod 24, thereby causing the roller 28 also to retract.

Although the invention has been particularly described with reference to a mower, it would be equally applicable to other rotary apparatus, for example a vacuum cleaner for the cleaning of floors and carpets.

## Claims

1. Rotary apparatus including an impeller for generating a cushion of air to maintain the apparatus above and spaced from a reaction surface in use, characterised by comprising at least one transversely-disposed axle having wheel means mounted thereon for rotation, the axle being displaceable between a lowered position in which the wheel means are ground-engageable and a retracted position in which the wheel means are spaced from the reaction surface in use.

2. Rotary apparatus according to Claim 1, in which the apparatus is a rotary mower including a rotary cutting blade.

3. Rotary apparatus according to Claim 2, in which the wheel means when in the retracted position are above the plane in which the cutter blade rotates.

4. Rotary apparatus according to any of Claims 1 to 3, the apparatus including at least two transversely-disposed axles each including wheel means, each axle being displaceable between respective lowered and retracted positions.

5. Rotary apparatus according to Claim 4, in which the axles are linked together, whereby displacement of one axle causes simultaneous displacement of the other axle or axles.

6. Rotary apparatus according to Claim 4 or Claim 5, in which the wheel means comprise at least one wheel rotatably mounted on a first axle and at least one roller rotatably mounted on a second axle.

7. Rotary apparatus according to any preceding claim, including means to adjust the extent of the lowered axle position to vary the effective cutting height.

8. Rotary apparatus according to any preceding claim, including means to isolate the impeller or to reduce the effect thereof when the wheel means are in the lowered position.

9. Rotary apparatus according to any preceding claim, in which the or each axle is cranked whereby a first part is pivotably mounted to the body of the apparatus about a first horizontal transverse axis, the wheel means being rotatably mounted on a second part or parts about a second axis substantially parallel to and spaced from the first, whereby pivoting movement of the first part of the axle moves the second part or parts in an arc between a position in which the wheel means are raised and a position in which the wheel means are lowered.

10. Rotary apparatus according to Claim 9, in which there are two cranked axles linked together by a rod member pivotably joined at each end to a radially-disposed lever attached to that part of the respective axle mounted to the body of the apparatus, whereby pivotal movement of one axle causes its associated lever to transmit a similar pivotal movement to the other axle.
